# EUROPEAN PATENT SPECIFICATION

(11) **EP 4 236 731 B1**
(45) Date of publication and mention of the grant of the patent: **16.07.2025**
(21) Application number: 21801247.4
(22) Date of filing: 29.10.2021
(51) Int. Cl.: A47J 31/44, A47J 31/46, B67D 1/00

(54) **DISPENSING ASSEMBLY FOR DISPENSING A FLOWABLE FOOD PRODUCT**
ABGABEVORRICHTUNG ZUR ABGABE FLIESSFÄHIGER NAHRUNGSMITTEL
ENSEMBLE DE DISTRIBUTION POUR DISTRIBUER UN PRODUIT ALIMENTAIRE FLUIDE

(30) Priority: 29.10.2020 EP 20204598
(43) Date of publication of application: 06.09.2023
(73) Proprietor: FrieslandCampina Nederland B.V., 3818 LE Amersfoort (NL)
(72) Inventor: VAN DRUTEN, Wiebe Nicolaas, 6708 WH Wageningen (NL)
(74) Representative: FrieslandCampina IP Department
(86) International application number: PCT/NL2021/050660
(87) International publication number: WO 2022/093025

(56) References cited:
- WO-A1-2011/105942
- WO-A1-2016/043590
- WO-A1-2020/171698
- US-A1- 2009 011 110

## Description

The invention generally relates to a dispensing assembly for dispensing a flowable food product as well as to a method of dispensing a flowable food product.

Such dispensing assemblies and methods are known as such in various types, for example for dispensing a foamed milk product, for example as disclosed in WO2016/043590.

US2009011110 discloses a coffee machine for preparing hot, milkcontaining beverages and having a milk supply and a discharge means. In order to achieve improved handling, the milk supply is configured for accommodating concentrated milk. A mixing device is provided for mixing the concentrated milk with water.

US2005118319 provides a foamed milk system for creating foamed milk from a source of condensed milk, a source of water, and a source of pressurized air. The foamed milk system includes a milk inlet system for the condensed milk, a water inlet system for the water, an air inlet system for the pressurized air, and a mixing area to mix the condensed milk, the water, and the pressurized air.

In an example of a known dispensing assembly and method, a disposable bag-in-box (BIB) type container which holds a product concentrate is provided with a mixing unit at an outlet of the container, wherein in the mixing unit the product concentrate is mixed with a fluid or fluids, e.g. water and air, for subsequent dispensing of the mix as a flowable food product, e.g. from a spout of the mixing unit. For receiving the fluid or fluids, the mixing unit is connected to one or more respective fluid supplies which are provided by a suitable dispensing machine. Such a dispensing assembly and method can provide improved hygiene compared to alternatives, in particular when the mixing unit is fixedly connected to, and preferably disposable or recyclable with, the container. Prior to dispensing, the dispensing assembly, i.e. the product holding container together with the respective mixing unit, may thus be sterilized. Contamination after initial dispensing is subsequently limited in particular by a relatively short product flow path length from the container to the spout.

However, one disadvantage of the known solution is that the dispensing machine which provides the fluid supply needs to accommodate the spatial arrangement of the dispensing assembly, in particular the spatial relationship between the container, relevant fluid inlets of the mixing unit, and the spout or other dispensing outlet. Depending on the specific dispensing application, this can be difficult or even practically impossible. For example, in the case of coffee dispensing machines which additionally dispense foamed milk as a flowable food product, it has been found that such accommodation can be hampered by design requirements associated with the coffee dispensing function of the machine.

It follows that there is a need for an improved dispensing assembly and method for dispensing a flowable food product. An object of the present invention is to provide such an improved dispensing assembly and method, , wherein at least one of the above-described disadvantages are at least partly overcome while the above-described advantages are substantially maintained. An object is to provide a dispensing assembly which is more versatile, in particular with respect to cooperation with a beverage dispensing machine, while also enabling good food product hygiene and preferably good food product quality, and efficient and user-friendly handling. An object is to provide such a dispensing assembly which is easy to use, easy to transport, easy to manufacture and/or easy to recycle.

To that end, an aspect of the invention provides a dispensing assembly according to claim 1 for dispensing a flowable food product.

The dispensing assembly comprises a bag-in-box type container for holding a product concentrate, the container having a concentrate outlet for releasing product concentrate from the container. The dispensing assembly comprises a mixing unit spaced apart from the concentrate outlet, the mixing unit being configured for mixing the product concentrate with a liquid, e.g. water, the mixing unit having a concentrate inlet for receiving product concentrate released from the container, a liquid inlet for receiving the liquid, and a spout for dispensing as a flowable food product the product concentrate mixed with the liquid. The dispensing assembly comprises a duct arranged for guiding a flow of product concentrate along a flow path from the concentrate outlet of the container to the concentrate inlet of the mixing unit, wherein at least a section of the duct is flexible.

By thus spacing the mixing unit apart from the concentrate outlet and providing an at least partially flexible duct therebetween, versatility of the dispensing assembly is greatly increased while good hygiene and product quality can be maintained. In particular, a relative spatial arrangement of the mixing unit and the container can thus be adjusted depending on constraints and/or preferences associated with an associated dispensing machine.

Prior to initial use the dispensing assembly is changeable from a sealed state to a flow enabling state, wherein in the sealed state an interior space of the dispensing assembly is sealed off from an environment thereof, said interior space extending at least in the container and being configured for holding product concentrate, wherein in the flow enabling state the duct provides the flow path for the flow of product concentrate.

Product hygiene can thus be promoted, wherein in particular a risk of contamination of the product concentrate and/or of the container prior to initial dispensing can be advantageously reduced.

The dispensing assembly comprises an activation assembly configured for actuating, e.g. moving and/or breaking, a sealing element of the dispensing assembly, such that the dispensing assembly is thereby changed from the sealed state to the flow enabling state.

The dispensing assembly can thus be changed from the sealed state to the flow enabling state particularly easily and hygienically.

Optionally, the sealing element and/or the activation assembly is arranged at the concentrate outlet of the bag-in-box type container, in particular at a connection between said outlet and the duct. Preferably, the activation assembly is configured to mechanically connect the duct and the container to each other and/or to provide part of the flow path, at least when the dispensing assembly is in the flow enabling state.

The sealed interior space may thus be substantially confined to an interior of the container, so prior to use e.g. cooling of the product concentrate can be achieved by cooling the container. Also, this arrangement of the sealing element and/or activation assembly can provide tamper evidence of the BIB.

Optionally, the sealing element comprises a foil or sealing plug, for example made from metal and/or plastic, which is breakable by the activation assembly, the activation assembly for example comprising a piercing and/or cutting member for breaking said foil or plug.

Alternatively, or additionally, the sealing element optionally comprises a plug and/or a cap, which is preferably moveable by the activation assembly with respect to a respective receiving structure from a sealing position to an opened position.

Good, hygienic sealing can thus be provided in combination with good ease of use.

Optionally, the dispensing assembly comprises a further sealing element, for example upstream or downstream from the sealing element, wherein the activation assembly is configured for actuating, e.g. moving and/or breaking, the further sealing element while actuating the sealing element such that the dispensing assembly is thereby changed from the sealed state to the flow enabling state.

Sealing redundancy can thus be provided, further promoting hygiene. Also, a further interior space may thus be sealed from its environment (and optionally from the product concentrate holding interior space) prior to use, the further interior space for example extending in the duct. Thus prior to use the duct and the container may be separate from each other, for example in a kit of parts, while good hygiene and ease of use are provided.

Optionally, the dispensing assembly is manually changeable from the sealed state to the flow enabling state, for example by manual actuation, e.g. pushing, of an activation assembly, for example manual actuation with respect to the bag-in-box type container.

A user can thus change the dispensing assembly to the flow enabling state immediately prior to initial dispensing.

Optionally, prior to the dispensing at least the duct is provided with a removable packaging which seals off an interior of the duct from an environment thereof.

A risk of contamination during e.g. transportation and handling can thus be advantageously reduced.

Optionally, the dispensing assembly is configured such that in the flow enabling state the flow path is substantially, preferably aseptically, sealed off from an environment of the dispensing assembly, at least when no product is dispensed from the assembly.

Various means for such sealing off are known as such and can be advantageously employed in the present context. Risk of product contamination is thus reduced.

Optionally, the duct is provided with a pumping element and/or a pump for pumping product concentrate through the duct from the container to the mixing unit.

Good flow of product concentrate along the flow path can thus be promoted, wherein for example a flow resistance associated with the duct and/or a hydrostatic pressure can be overcome.

Optionally, the pumping element and/or pump comprises, and/or is configured to form part of, a peristaltic pump which is e.g. configured to actuate a flexible wall of the duct from outside the duct for urging product concentrate along the flow path inside the duct.

In this way the pumping element and/or pump need not come into direct contact with the product being pumped.

According to a preferred aspect, the mixing unit is configured for mixing the product concentrate with the liquid first for obtaining a (liquid) food product, and for mixing the resulting (liquid) food product with a gas, e.g. air, in particular for providing a foamed food product, wherein preferably the mixing unit comprises a respective gas inlet for receiving the gas, wherein preferably the mixing unit comprises one or more (for example at least two) microfiltration devices for mixing the gas with the liquid food product.

A foamed food product, for example a foamed milk product or a foamed cream product, can thus be produced from a product concentrate, for example a milk concentrate or a cream concentrate. It has been found that application of at least one microfiltration device for mixing gas with liquid (in particular a liquid food product, e.g. milk or cream) can provide good product foaming, using relatively compact means.

Each microfiltration device preferably comprises a tubular microfiltration wall having gas transmissive pores, said microfiltration device comprising an inlet opening and an outlet opening, said microfiltration device further comprising a housing surrounding said tubular microfiltration wall for forming a gas supply space between the tubular microfiltration wall and the housing, wherein said housing comprises a gas opening in communication with said gas inlet tube, said tubular microfiltration wall e.g. being made of a hydrophobic material.

Optionally, the mixing unit comprises a valve member for regulating a flow of product concentrate through the concentrate inlet, wherein preferably the valve member is configured to be controlled, e.g. moved, by a dispensing machine which is configured to supply the liquid to the liquid inlet of the mixing unit, wherein preferably the valve member is configured to connect to a liquid injector of the dispensing machine, the valve member for example being arranged at the liquid inlet.

Such a valve member is known as such in a known dispensing assembly, see for example WO2016/043590, and can be advantageously incorporated in a dispensing assembly according to the present disclosure as will be appreciated by the skilled person.

Optionally, a flow path length of the duct is in the range of 1 cm to 100 cm, preferably in the range of 5 cm to 60 cm, more preferably in the range of 10 cm to 40 cm, for example about 20 cm, wherein preferably an internal flow path width, e.g. diameter, of the duct is in the range of 2 mm to 30 mm, preferably 5 mm to 20 mm, for example 8 mm to 16 mm.

A good balance of versatility, ease of use and hygiene can thus be provided.

Optionally, the duct, at least a flexible section thereof, is made from a polymeric material, in particular a flexible and/or resilient polymeric material.

Such a material can provide good flexibility while also enabling good food product hygiene and quality. In particular such a material can provide recuperating mechanical behavior of the duct, e.g. in response to a deformation due to pumping action.

Optionally, the bag-in-box type container holds the product concentrate, in particular a liquid product concentrate, more in particular a dairy concentrate, for example a milk concentrate or a cream concentrate or cream.

A further aspect of the invention provides a system for dispensing a flowable food product. The system comprises a dispensing assembly as described above and a dispensing machine configured to cooperate with said dispensing assembly for dispensing the flowable food product, wherein in particular the dispensing machine is configured to supply the liquid to the liquid inlet of the mixing unit.

The dispensing machine comprises or is part of a coffee dispensing machine, wherein for example the flowable food product is a foamed milk product.

Such a system can provide above-mentioned advantages.

A further aspect provides a kit of parts for assembling therefrom a dispensing assembly as described above, the kit comprising the bag-in-box type container, the mixing unit and the duct, wherein in the kit for example the container is separate from the mixing unit and/or from the duct.

Such a kit can provide above-mentioned advantages, wherein in particular the dispensing assembly is easily arranged with respect to an associated dispensing machine while assembling the dispensing assembly from the kit, wherein for example the duct can be easily guided through a passage of the machine prior to and/or during the assembling.

For example, the present invention can be used to upgrade an existing (coffee) dispensing machine in a straight-forward manner to an upgraded dispensing machine that has an additional capability (next to dispensing coffee) of dispensing foamed food product (e.g. foamed milk). Upgrading the existing dispensing machine can e.g. involve adding the mixing unit to the coffee dispensing machine, adding a separate BIB-container (e.g. placing the BIB container outside the coffee machine), and coupling the BIB container to the mixing unit via the at least partially flexible duct. In case of upgrading an existing (coffee) dispensing machine, it is also preferred that the dispensing machine is provided with a means for controlling the added mixing unit, for example for operating/controlling an afore-mentioned product concentrate flow valve member of the mixing unit (if such a valve member is present), wherein the dispensing machine is preferably being provided with a liquid injector to supply the liquid (e.g. water) to a liquid inlet of the mixing unit. Also, it is preferred that the machine is (re)configured to supply gas, e.g. air, to the mixing unit, in particular in case the mixing unit is configured for mixing a liquid food product with gas for providing a foamed food product.

A further aspect of the invention provides a method of dispensing a flowable food product. The method comprises providing a dispensing assembly as described above, preferably in a system as described above.

The method comprises mixing, in the mixing unit, a flow of concentrate, which flow is guided from the bag-in-box type container through the duct to the mixing unit, with a liquid received at the liquid inlet, preferably received from the dispensing machine of the system.

The method comprises dispensing, in particular from the mixing unit, as a flowable food product the product concentrate mixed with the liquid, wherein optionally the flowable food product is dispensed as a foamed food product.

Such a method can provide above-mentioned advantages.

If the dispensing assembly is changeable from a sealed state to a flow enabling state, the method optionally comprises sterilizing one or more, preferably all, interior spaces of the dispensing assembly and subsequently changing the dispensing assembly from the sealed state to the flow enabling state, in particular prior to the mixing.

The sterilizing can be part of a food product conservation process associated with the product concentrate in the container, for example a pasteurizing process and/or an irradiating process.

Optionally, the method comprises pumping product concentrate from the bag-in-box type container through the duct to the mixing unit.

In the following, the invention will be explained further using exemplary embodiments and drawings. The drawings are schematic and merely show examples. In the drawings, similar or corresponding elements have been provided with similar or corresponding reference signs. In the drawings:
Fig. 1 shows a cross sectional view of a dispensing assembly according to an exemplary embodiment;
Fig. 2 shows a cross sectional view of part of a mixing unit of a dispensing machine with a cooperating part of a liquid injector of a dispensing machine; and
Fig. 3 shows a cross sectional view of a system for dispensing a flowable food product according to an exemplary embodiment.

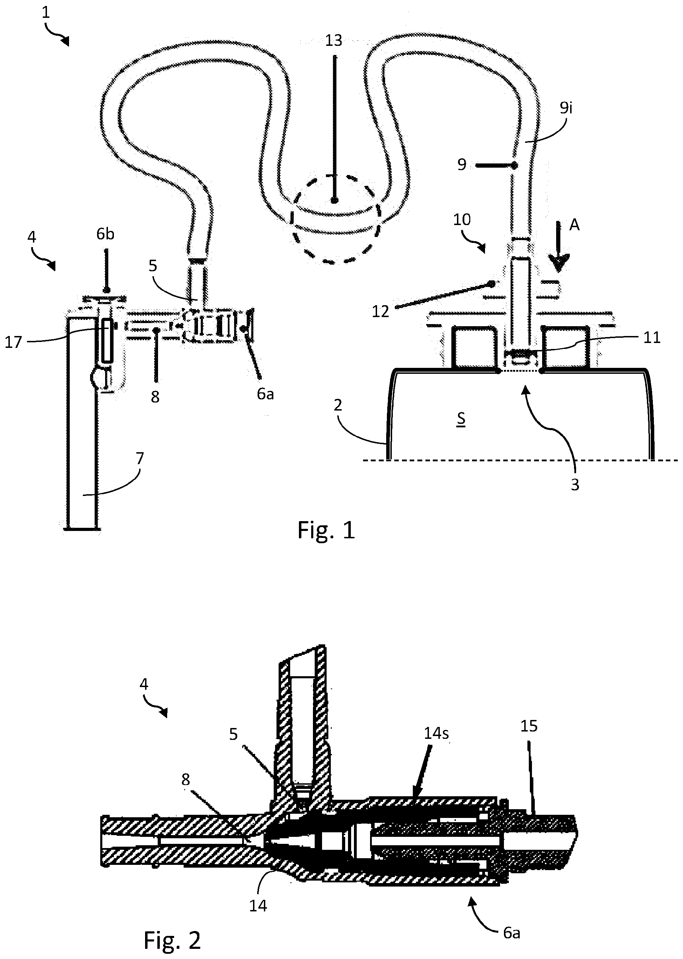

Fig. 1 shows a dispensing assembly 1 for dispensing a flowable food product. The dispensing assembly 1 comprises a bag-in-box (BIB) type container 2 for holding a product concentrate, the container 2 having a concentrate outlet 3 for releasing product concentrate from the container 2.

The dispensing assembly 1 comprises a mixing unit 4 spaced apart from the concentrate outlet 3, the mixing unit 4 being configured for mixing the product concentrate with a liquid, e.g. water, the mixing unit 4 having a concentrate inlet 5 for receiving product concentrate released from the container 2, a liquid inlet 6a for receiving the liquid, and a spout 7 for dispensing as a flowable (i.e. liquid) food product the product concentrate mixed with the liquid.

In the shown example, the mixing unit 4 comprises a mixing chamber 8 or the like for mixing the product concentrate with a liquid, e.g. water, supplied to the liquid inlet 6a, in particular supplied by a liquid injector 15 of a dispensing machine M. The water may be heated in the machine M prior to supply via the injector 15.

A gas inlet 6b is arranged downstream of said mixing chamber 8 for receiving a gas, e.g. air, in the mixing unit 4. Thus, in this example, during use, in the mixing unit 4 concentrate is first mixed with a liquid (e.g. water) supplied to the liquid inlet 6a, and subsequently said concentrate mixed with liquid (i.e. the resulting liquid food product) is mixed with a gas (e.g. air) supplied to the gas inlet 6b, in particular for foaming of the liquid food product (i.e. of the concentrate mixed with liquid).

The dispensing assembly 1 comprises a duct 9 arranged for guiding a flow of product concentrate along a flow path from the concentrate outlet 3 of the container 2 to the concentrate inlet 5 of the mixing unit 4. In the shown example, substantially the entire duct 9 is flexible, in particular for flexibly adjusting the flow path prior to initial use, e.g. when arranging and/or assembling the dispensing assembly 1 with respect to a dispensing machine M. Alternatively, only one or more sections of the duct 9 may be flexible.

With reference to Fig. 1, it will be appreciated that the flow path thus extends along the shown path of the duct 9 from the concentrate outlet 3 to the concentrate inlet 5.

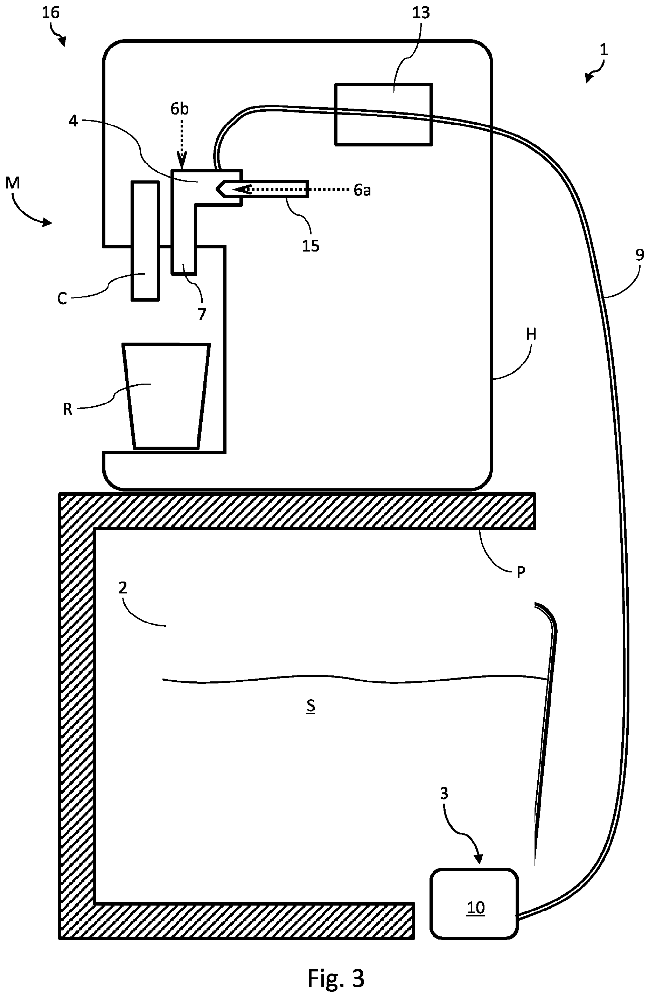

While Fig. 1 shows the concentrate outlet 3 as arranged at a top end of the container 2, it will be appreciated that such a concentrate outlet 3 may more advantageously be arranged at a bottom end of the container 2, as shown in Fig. 3, to promote a flow of concentrate from the container 2 through the outlet 3 under influence of gravity. Alternatively, for example, a concentrate outlet 3 spaced away from a bottom end of the container 2 may be provided with a dip tube (not shown) which extends into, the container, in particular towards a bottom end thereof.

In the example of Fig. 1, as will be explained further, prior to initial use the dispensing assembly 1 is changeable from a sealed state to a flow enabling state, wherein in the sealed state an interior space S of the dispensing assembly is sealed off from an environment thereof, said interior space S extending at least in the container 2 and being configured for holding product concentrate, wherein in the flow enabling state the duct 9 provides the flow path for the flow of product concentrate.

With further reference to Fig. 1, the exemplary dispensing assembly 1 comprises an activation assembly 10 configured for actuating, e.g. moving and/or breaking, a sealing element 11 of the dispensing assembly, such that the dispensing assembly 1 is thereby changed from the sealed state to the flow enabling state.

In the example, the activation assembly 10 comprises an actuation member 12 for manual actuation of the sealing element 11 (either directly or indirectly), e.g. by pushing the actuation member 12 towards the sealing element 11 in the direction of arrow A in Fig. 1.

As shown, the sealing element 11 and the activation assembly 10 are arranged at the concentrate outlet 3 of the bag-in-box type container 2, in particular at a connection between said outlet 3 and the duct 9, wherein the activation assembly 10 is configured to mechanically connect the duct 9 and the container 2 to each other and to provide part of the flow path, at least when the dispensing assembly 1 is in the flow enabling state.

As one example, the sealing element 11 may comprise a foil, for example made from metal and/or plastic, which is breakable by the activation assembly 10, the activation assembly for example comprising a piercing and/or cutting member (not explicitly shown) for breaking said foil, said piercing and/or cutting member for example being arranged at an end of, e.g. as part of, the actuation member 12.

As another example, the sealing element 11 alternatively or additionally comprises a plug and/or a cap which is moveable by the activation assembly 10, in particular by actuation of the actuation member 12, with respect to a respective receiving structure from a sealing position to an opened position.

In a possible elaboration, the dispensing assembly 1 comprises a further sealing element (not shown), for example upstream or downstream from the sealing element 11, wherein the activation assembly 10 is configured for actuating, e.g. moving and/or breaking, the further sealing element while actuating the sealing element 11 such that the dispensing assembly 1 is thereby changed from the sealed state to the flow enabling state.

In the example of Fig. 1, as explained, the dispensing assembly is manually changeable from the sealed state to the flow enabling state, in particular by manual actuation, e.g. pushing, of the activation assembly 10, in this example manual actuation with respect to the bag-in-box type container 2.

Optionally, prior to the dispensing at least the duct 9 is provided with a removable packaging (not shown) which seals off an interior 9i of the duct 9 from an environment thereof.

The dispensing assembly 1 is preferably configured such that in the flow enabling state the flow path is substantially, preferably aseptically, sealed off from an environment of the dispensing assembly 1, at least when no product is dispensed from the assembly 1.

The duct 9 can be provided with a pumping element and/or a pump 13 for pumping product concentrate through the duct 9 from the container 2 to the mixing unit 4. In Fig. 1, an exemplary position of the pumping element and/or pump 13 has been indicated. It will be appreciated that such a pumping element and/or pump may alternatively or additionally be arranged elsewhere along the duct 9. Such a pumping element and/or pump 13 may be complimentary to a pumping function provided at the mixing unit 4 and/or at the container 2. Such an additional pumping function at the container 2 can be particularly beneficial in case of a relatively thick and/or viscous product concentrate such as a cream concentrate or cream.

Preferably the pumping element and/or pump 13 comprises, and/or is configured to form part of, a peristaltic pump which is e.g. configured to actuate a flexible wall of the duct 9 from outside the duct 9 for urging product concentrate along the flow path inside the duct 9.

In the example of Fig. 1, as previously alluded to, the mixing unit 4 is configured for mixing the product concentrate with the liquid first for obtaining a food product, and for mixing the resulting food product with a gas, e.g. air, in particular for providing a foamed food product, wherein the mixing unit 4 comprises a gas inlet 6b for receiving the gas. Preferably the mixing unit 4 comprises one or more microfiltration devices 17 for mixing a gas with a liquid, in particular downstream of the gas inlet 6b.

Each microfiltration device 17 preferably comprises a tubular microfiltration wall having gas transmissive pores, said microfiltration device 17 comprising an inlet opening and an outlet opening, said microfiltration device 17 further comprising a housing surrounding said tubular microfiltration wall for forming a gas supply space between the tubular microfiltration wall and the housing, wherein said housing comprises a gas opening in communication with said gas inlet tube. For example, said tubular microfiltration wall can be made of a hydrophobic material.

As shown in the detailed view of Fig. 2, the mixing unit 4 may comprise a valve member 14 for regulating a flow of product concentrate through the concentrate inlet 5. In this example the valve member 14 is configured to be controlled, e.g. moved, by a dispensing machine M (see Fig. 3) which is configured to supply the liquid to the liquid inlet 6a of the mixing unit 4, wherein the valve member 14 is configured to connect to a liquid injector 15 of the dispensing machine M, the valve member 14 being arranged at the liquid inlet 6a. As shown, a sealing section 14s of the valve member 14 is preferably configured to provide a sealed connection between the valve member 14 and the liquid injector 15. Such an arrangement as such of a valve member in a mixing unit of a dispensing assembly has been described in detail in WO2016/043590, features of which can be advantageously applied in the context of the present invention, as will be clear to the skilled person.

It will be appreciated that in Figs. 1 and 3 the duct 9 is not necessarily drawn to scale. A flow path length of the duct 9 is preferably in the range of 1 cm to 100 cm, preferably in the range of 5 cm to 60 cm, more preferably in the range of 10 cm to 40 cm, for example about 20 cm, wherein preferably an internal flow path width, e.g. diameter, of the duct 9, in particular measured transverse to the flow path, is in the range of 2 mm to 30 mm, preferably 5 mm to 20 mm, for example 8 mm to 16 mm.

The duct 9, at least a flexible section thereof, is preferably made from a polymeric material, in particular a flexible and/or resilient polymeric material. Such a material can provide recuperating mechanical behavior of the duct, e.g. in response to a deformation due to pumping action.

In use, the bag-in-box type container 2 thus holds the product concentrate to be dispensed. Prior to initial dispensing, the product concentrate is thus preferably confined to a sealed internal space S which extends at least, and preferably substantially, in the container 2. The product concentrate can be a liquid product concentrate, more in particular a dairy concentrate, for example a milk based concentrate or a cream based concentrate.

The exemplary milk or cream based concentrate comprises 20 wt% dry matter to 30 wt% dry matter, preferably 23 - 27 wt% dry matter, whereas milk with a normal water content, which latter is also called unconcentrated milk, comprises 10 wt% dry matter.

In addition, the maximum amount of milk or cream based concentrate contained in the container 4 can amount to 2 to 10 liters for professional use and 0.2 to 1 liter (200 mL to 1000 mL) for home use and the milk or cream based concentrate can in embodiments comprise 20 wt% dry matter to 30 wt% dry matter, preferably 23 - 27 wt% dry matter.

Fig. 3 shows a system 16 for dispensing a flowable food product, the system comprising a dispensing assembly 1 as described and a dispensing machine M configured to cooperate with said dispensing assembly 1 for dispensing the flowable food product, wherein in particular the dispensing machine M is configured to supply the liquid to the liquid inlet 6a of the mixing unit 4. Preferably the machine M is also configured to supply the gas, e.g. air, to the gas inlet 6b. To that aim, the machine M can e.g. be provided with a gas pressure source or gas pump (not shown), connected or connectable to the gas inlet 6b, as will be appreciated by the skilled person.

As shown, part 3, 4 of the dispensing assembly 1 may thus be arranged in a housing H of the dispensing machine M, while another part 2 may be arranged outside said housing H. For example, as shown in Fig. 3, the mixing unit 4 and optionally the pump 13 are arranged in said housing H together with part of the duct 9, while the container 2, the activation assembly 10 and another part of the duct 9 are arranged outside said housing H.

It will be appreciated that many variations are thus possible with respect to spatial arrangement of the dispensing assembly 1 relative to an associated dispensing machine. A particularly versatile dispensing assembly 1 can thus be provided, wherein for example a relatively large container 2 (see Fig. 3) holding a relatively large volume of product concentrate can be used with relatively little use of space inside the housing H of the machine M, in particular by placing/arranging the BIB container 2 outside the housing H of that machine (see Fig. 3). The BIB container 2 can thus for example be placed substantially out of view and/or at a location which is convenient for a product dispensing workflow, e.g. in or under a platform P for the machine M (see Fig. 3).

As an example, the flexible duct 9 can extend through an external wall, e.g. a side wall and/or a bottom wall, of the housing H of the dispensing machine (in which case the housing H can include an opening or passage for entry/passage of the flexible duct 9).

Optionally the dispensing machine M comprises or is part of a coffee dispensing machine, wherein for example the flowable food product is a foamed milk product or a foamed cream product. With reference to Fig. 3, the dispensing machine may to that end may comprise a coffee dispensing outlet C, preferably substantially adjacent to the spout 7 of the mixing unit 4. In this way, for example coffee and foamed milk can easily be dispensed, e.g. subsequently and/or simultaneously, into a receptacle R such as a cup, mug or glass.

With reference to the drawings and to the above description, an exemplary kit of parts for assembling therefrom a dispensing assembly 1 as described comprises at least the bag-in-box type container 2, the mixing unit 4 and the duct 9, wherein in the kit for example the container 2 is separate from the mixing unit 4 and/or from the duct 9.

For example, one or more embodiments of the present invention can be used to upgrade an existing (coffee) dispensing machine in a straight-forward manner to an upgraded dispensing machine M that has an additional capability of dispensing foamed food product (e.g. foamed milk). In particular, a relatively compact coffee dispensing machine M can be used in combination with a relatively bulky BIB-container 2 for delivering a relatively large quantity of product concentrate.

In an aspect of the present disclosure, a coffee machine can e.g. be provided with a mixing unit 4 and a respective liquid injector 15, wherein the machine can further be configured to supply gas, e.g. air, to the gas inlet 6b of the mixing unit (for example by providing or installing a gas source or gas pump to or in the coffee machine), wherein an external BIB-container can be connected to the mixing unit via the duct 9 (leading to a coffee machine M with foamed food product dispensing capabilities).

It should also be observed that in an alternative embodiment, the housing H of the coffee machine can be configured for receiving or enclosing a BIB-container 2.

With continued reference to the drawings and the above description, an exemplary method of dispensing a flowable food product comprises providing a dispensing assembly 1 as described, preferably in a system 16 as described.

The method comprises mixing, in the mixing unit 4, a flow of concentrate, which flow is guided from the bag-in-box type container 2 through the duct 9 to the mixing unit 4, with a liquid received at the liquid inlet 6a, preferably received from the dispensing machine M of the system 16. The method comprises dispensing, in particular from the mixing unit 4, as a flowable food product the product concentrate mixed with the liquid, wherein optionally the flowable food product is dispensed as a foamed food product.

The exemplary method comprises sterilizing one or more, preferably all, interior spaces S, 9i of the dispensing assembly 1 and subsequently changing the dispensing assembly 1 from the sealed state to the flow enabling state, in particular prior to the mixing.

The exemplary method comprises pumping product concentrate from the bag-in-box type container 2 through the duct 9 to the mixing unit 4, for example pumping with a pumping element or pump 13 arranged in the flow path along the duct 9 and/or a pump arranged elsewhere.

While the invention has been explained using exemplary embodiments and drawings, these are not to be construed as in any way limiting the scope of the invention, which scope is provided by the claims. Many variations, combinations and extensions as defined by the scope of the appended claims are possible, as will be appreciated by the skilled person. Examples thereof have been provided throughout the description.

## Claims

1. Dispensing assembly (1) for dispensing a flowable food product, comprising:
- a bag-in-box type container (2) for holding a product concentrate, the container (2) having a concentrate outlet (3) for releasing product concentrate from the container (2);
- a mixing unit (4) spaced apart from the concentrate outlet (3), the mixing unit (4) being configured for mixing the product concentrate with a liquid, e.g. water, the mixing unit (4) having a concentrate inlet (5) for receiving product concentrate released from the container (2), a liquid inlet (6a) for receiving the liquid, and a spout (7) for dispensing as a flowable food product the product concentrate mixed with the liquid,
wherein the mixing unit (4) is configured for mixing the product concentrate with the liquid first for obtaining a liquid food product, and for mixing the resulting food product with a gas, e.g. air, in particular for providing a foamed food product, wherein the mixing unit comprises a respective gas inlet for receiving the gas, wherein the mixing unit comprises one or more microfiltration devices (17) for mixing the gas with the liquid food product; and **characterized in that** it further comprises
- a duct (9) arranged for guiding a flow of product concentrate along a flow path from the concentrate outlet (3) of the container (2) to the concentrate inlet (5) of the mixing unit (4), wherein at least a section of the duct (9) is flexible,
and
wherein prior to initial use the dispensing assembly (1) is changeable from a sealed state to a flow enabling state, wherein in the sealed state an interior space (S) of the dispensing assembly (1) is sealed off from an environment thereof, said interior space (S) extending at least in the container (2) and being configured for holding product concentrate, wherein in the flow enabling state the duct (9) provides the flow path for the flow of product concentrate,
and further
comprising an activation assembly (10) configured for actuating, e.g. moving and/or breaking, a sealing element (11) of the dispensing assembly (1), such that the dispensing assembly (1) is thereby changed from the sealed state to the flow enabling state.

2. Dispensing assembly according to claim 1, wherein the sealing element (11) and/or the activation assembly (10) is arranged at the concentrate outlet (3) of the bag-in-box type container (2), in particular at a connection between said outlet (3) and the duct (9).

3. Dispensing assembly according to claim 2,wherein the activation assembly (10) is configured to mechanically connect the duct (9) and the container (2) to each other and/or to provide part of the flow path, at least when the dispensing assembly (1) is in the flow enabling state.

4. Dispensing assembly according to claim 2 or 3, wherein the sealing element (11) comprises a foil, for example made from metal and/or plastic, which is breakable by the activation assembly (10), the activation assembly (10) for example comprising a piercing and/or cutting member for breaking said foil.

5. Dispensing assembly according to any one of claims 2 - 4, wherein the sealing element (11) comprises a plug and/or a cap, which is preferably moveable by the activation assembly (10) with respect to a respective receiving structure from a sealing position to an opened position.

6. Dispensing assembly according to any one of the claims 2 - 4,
wherein the dispensing assembly (1) is manually changeable from the sealed state to the flow enabling state, for example by manual actuation, e.g. pushing, of an activation assembly (10), for example manual actuation with respect to the bag-in-box type container (2).

7. Dispensing assembly according to any of the preceding claims, configured such that in the flow enabling state the flow path is substantially, preferably aseptically, sealed off from an environment of the dispensing assembly (1), at least when no product is dispensed from the assembly (1).

8. Dispensing assembly according to any of the preceding claims,
wherein the duct (9) is provided with a pumping element and/or a pump (13) for pumping product concentrate through the duct (9) from the container (2) to the mixing unit (4),
wherein preferably the pumping element and/or pump (13) comprises, and/or is configured to form part of, a peristaltic pump which is e.g. configured to actuate a flexible wall of the duct (9) from outside the duct (9) for urging product concentrate along the flow path inside the duct (9).

9. Dispensing assembly according to any of the preceding claims,
wherein the mixing unit (4) comprises at least two microfiltration devices (17) for mixing the gas with the liquid.

10. Dispensing assembly according to any of the preceding claims,
wherein the mixing unit (4) comprises a valve member (14) for regulating a flow of product concentrate through the concentrate inlet (5), wherein preferably the valve member (14) is configured to be controlled, e.g. moved, by a dispensing machine (M) which is configured to supply the liquid to the liquid inlet (6a) of the mixing unit (4), wherein preferably the valve member (14) is configured to connect to a liquid injector (15) of the dispensing machine, the valve member (14) for example being arranged at the liquid inlet (6a).

11. Dispensing assembly according to any of the preceding claims,
wherein a flow path length of the duct (9) is in the range of 1 cm to 100 cm, preferably in the range of 5 cm to 60 cm, more preferably in the range of 10 cm to 40 cm, for example about 20 cm,
wherein preferably an internal flow path width, e.g. diameter, of the duct (9) is in the range of 2 mm to 30 mm, preferably 5 mm to 20 mm, for example 8 mm to 16 mm, and wherein the duct (9), at least a flexible section thereof, is made from a polymeric material, in particular a flexible and/or resilient polymeric material.

12. System (16) for dispensing a flowable food product, the system (16) comprising a dispensing assembly (1) and a dispensing machine (M) configured to cooperate with said dispensing assembly (1) for dispensing the flowable food product,
wherein the dispensing machine (M) comprises or is part of a coffee dispensing machine, wherein the flowable food product is a foamed milk product,
the dispensing assembly comprising:
- a bag-in-box type container (2) for holding a product concentrate, the container (2) having a concentrate outlet (3) for releasing product concentrate from the container (2);
- a mixing unit (4) spaced apart from the concentrate outlet (3), the mixing unit (4) being configured for mixing the product concentrate with a liquid, e.g. water, the mixing unit (4) having a concentrate inlet (5) for receiving product concentrate released from the container (2), a liquid inlet (6a) for receiving the liquid, and a spout (7) for dispensing as a flowable food product the product concentrate mixed with the liquid; and
- a duct (9) arranged for guiding a flow of product concentrate along a flow path from the concentrate outlet (3) of the container (2) to the concentrate inlet (5) of the mixing unit (4), wherein at least a section of the duct (9) is flexible,
wherein the mixing unit (4) comprises a valve member (14) for regulating a flow of product concentrate through the concentrate inlet (5), wherein the valve member (14) is configured to be controlled, e.g. moved, by the dispensing machine (M), wherein the valve member (14) is configured to connect to a liquid injector (15) of the dispensing machine, the dispensing machine (M) having a liquid injector (15) that is configured to control the valve member (14) of the dispensing assembly and to supply the liquid to the liquid inlet (6a) of the mixing unit (4), and
wherein the dispensing assembly (1) is an assembly according to any of claims 1 - 11, wherein the mixing unit (4) of the dispensing assembly is configured for mixing the product concentrate with the liquid first for obtaining a food product, and for mixing the resulting food product with a gas, e.g. air, in particular for providing a foamed food product, wherein the mixing unit comprises a respective gas inlet for receiving the gas, wherein the mixing unit comprises one or more microfiltration devices for mixing a gas with a liquid.

13. Method of dispensing a flowable food product, comprising:
- providing a dispensing assembly (1) according to any of claims 1
- 11, preferably in a system (16) according to claim 12;
- mixing, in the mixing unit (4), a flow of concentrate, which flow is guided from the bag-in-box type container (2) through the duct (9) to the mixing unit (4), with a liquid received at the liquid inlet (6a), preferably received from the dispensing machine (M) of the system (16); and
- dispensing, in particular from the mixing unit (4), as a flowable food product the product concentrate mixed with the liquid, wherein optionally the flowable food product is dispensed as a foamed food product.

## Patentansprüche

1. Abgabebaugruppe (1) zum Abgeben eines fließfähigen Nahrungsmittelprodukts, umfassend:
- einen Bag-in-Box-artigen Behälter (2) zur Aufnahme eines Produktkonzentrats, wobei der Behälter (2) einen Konzentratauslass (3) zur Freigabe von Produktkonzentrat aus dem Behälter (2) aufweist,
- eine von dem Konzentratauslass (3) beabstandete Mischeinheit (4), wobei die Mischeinheit (4) zum Mischen des Produktkonzentrats mit einer Flüssigkeit, z. B. Wasser, ausgestaltet ist, wobei die Mischeinheit (4) einen Konzentrateinlass (5) zur Aufnahme des aus dem Behälter (2) freigesetzten Produktkonzentrats, einen Flüssigkeitseinlass (6a) zur Aufnahme der Flüssigkeit und einen Auslauf (7) zur Abgabe des mit der Flüssigkeit gemischten Produktkonzentrats als ein fließfähiges Nahrungsmittelprodukt aufweist,
wobei die Mischeinheit (4) dazu ausgestaltet ist, zum Erhalten eines flüssigen Nahrungsmittelprodukts das Produktkonzentrat zuerst mit der Flüssigkeit zu mischen, und dazu insbesondere zum Bereitstellen eines geschäumten Nahrungsmittelprodukts das sich ergebende Nahrungsmittelprodukt mit einem Gas, z. B. Luft, zu mischen, wobei die Mischeinheit einen jeweiligen Gaseinlass zur Aufnahme des Gases umfasst, wobei die Mischeinheit eine oder mehrere Mikrofiltrationsvorrichtungen (17) zum Mischen des Gases mit dem flüssigen Nahrungsmittelprodukt umfasst, und **dadurch gekennzeichnet, dass** sie ferner Folgendes umfasst:
- eine Leitung (9), die zum Führen eines Stroms von Produktkonzentrat entlang eines Strömungswegs von dem Konzentratauslass (3) des Behälters (2) zu dem Konzentrateinlass (5) der Mischeinheit (4) angeordnet ist, wobei mindestens ein Abschnitt der Leitung (9) flexibel ist,
und
wobei die Abgabebaugruppe (1) vor der anfänglichen Verwendung aus einem abgedichteten Zustand in einen das Strömen ermöglichenden Zustand umgeschaltet werden kann, wobei in dem abgedichteten Zustand ein Innenraum (S) der Abgabebaugruppe (1) gegenüber einer Umgebung davon abgedichtet ist, wobei sich der Innenraum (S) mindestens in dem Behälter (2) erstreckt und zum Halten von Produktkonzentrat ausgestaltet ist, wobei die Leitung (9) in dem das Strömen ermöglichenden Zustand den Strömungsweg für das Strömen von Produktkonzentrat bereitstellt,
und ferner
umfassend eine Aktivierungsbaugruppe (10), die zum Betätigen, z. B. Bewegen und/oder Zerbrechen, eines Dichtungselements (11) der Abgabebaugruppe (1) ausgestaltet ist, so dass die Abgabebaugruppe (1) dadurch aus dem abgedichteten Zustand in den das Strömen ermöglichenden Zustand umgeschaltet wird.

2. Abgabebaugruppe nach Anspruch 1, wobei das Dichtungselement (11) und/oder die Aktivierungsbaugruppe (10) an dem Konzentratauslass (3) des Bag-in-Box-artigen Behälters (2), insbesondere an einer Verbindung zwischen dem Auslass (3) und der Leitung (9), angeordnet ist.

3. Abgabebaugruppe nach Anspruch 2, wobei die Aktivierungsbaugruppe (10) dazu ausgestaltet ist, die Leitung (9) und den Behälter (2) mechanisch miteinander zu verbinden und/oder einen Teil des Strömungswegs bereitzustellen, zumindest wenn sich die Abgabebaugruppe (1) in dem das Strömen ermöglichenden Zustand befindet.

4. Abgabebaugruppe nach Anspruch 2 oder 3, wobei das Dichtungselement (11) eine beispielsweise aus Metall und/oder Kunststoff hergestellte Folie umfasst, die durch die Aktivierungsbaugruppe (10) zerbrechbar ist, wobei die Aktivierungsbaugruppe (10) zum Zerbrechen der Folie beispielsweise ein Einstech- und/oder Schneidelement umfasst.

5. Abgabebaugruppe nach einem der Ansprüche 2 - 4, wobei das Dichtungselement (11) einen Stopfen und/oder eine Kappe umfasst, die bzw. der vorzugsweise mittels der Aktivierungsbaugruppe (10) bezüglich einer jeweiligen Aufnahmestruktur aus einer Dichtungsposition in eine geöffnete Position bewegbar ist.

6. Abgabebaugruppe nach einem der Ansprüche 2 - 4, wobei die Abgabebaugruppe (1) zum Beispiel durch manuelle Betätigung, z. B. Drücken, einer Aktivierungsbaugruppe (10), zum Beispiel manuelle Betätigung bezüglich des Bag-in-Box-artigen Behälters (2) manuell aus dem abgedichteten Zustand in den das Strömen ermöglichenden Zustand umschaltbar ist.

7. Abgabebaugruppe nach einem der vorhergehenden Ansprüche, die so ausgestaltet ist, dass der Strömungsweg in dem das Strömen ermöglichenden Zustand im Wesentlichen, vorzugsweise aseptisch, gegenüber einer Umgebung der Abgabebaugruppe (1) abgedichtet ist, zumindest wenn kein Produkt aus der Baugruppe (1) abgegeben wird.

8. Abgabebaugruppe nach einem der vorhergehenden Ansprüche, wobei die Leitung (9) mit einem Pumpelement und/oder einer Pumpe (13) zum Pumpen von Produktkonzentrat durch die Leitung (9) von dem Behälter (2) zu der Mischeinheit (4) versehen ist,
wobei vorzugsweise das Pumpelement und/oder die Pumpe (13) eine peristaltische Pumpe umfasst und/oder dazu ausgestaltet ist, einen Teil davon zu bilden, wobei die peristaltische Pumpe z. B. dazu ausgestaltet ist, eine flexible Wand der Leitung (9) von außerhalb der Leitung (9) zu betätigen, um Produktkonzentrat den Strömungsweg in der Leitung (9) entlangzudrängen.

9. Abgabebaugruppe nach einem der vorhergehenden Ansprüche, wobei die Mischeinheit (4) mindestens zwei Mikrofiltrationsvorrichtungen (17) zum Mischen des Gases mit der Flüssigkeit umfasst.

10. Abgabebaugruppe nach einem der vorhergehenden Ansprüche, wobei die Mischeinheit (4) ein Ventilglied (14) zum Regulieren einer Strömung von Produktkonzentrat durch den Konzentrateinlass (5) umfasst, wobei vorzugsweise das Ventilglied (14) dazu ausgestaltet ist, durch eine Abgabemaschine (M) gesteuert, z. B. bewegt, zu werden, die dazu ausgestaltet ist, die Flüssigkeit dem Flüssigkeitseinlass (6a) der Mischeinheit (4) zuzuführen, wobei vorzugsweise das Ventilglied (14) dazu ausgestaltet ist, mit einem Flüssigkeitsinjektor (15) der Ausgabemaschine verbunden zu werden, wobei das Ventilglied (14) beispielsweise an dem Flüssigkeitseinlass (6a) angeordnet ist.

11. Abgabebaugruppe nach einem der vorhergehenden Ansprüche, wobei eine Strömungsweglänge der Leitung (9) im Bereich von 1 cm bis 100 cm, vorzugsweise im Bereich von 5 cm bis 60 cm, weiter bevorzugt im Bereich von 10 cm bis 40 cm liegt, und zum Beispiel etwa 20 cm beträgt, wobei vorzugsweise eine innere Strömungswegbreite, z.B. ein Durchmesser, der Leitung (9) im Bereich von 2 mm bis 30 mm, vorzugsweise 5 mm bis 20 mm, beispielsweise 8 mm bis 16 mm liegt und wobei die Leitung (9), zumindest ein flexibler Abschnitt davon, aus einem polymeren Material, insbesondere einem flexiblen und/oder elastischen polymeren Material, hergestellt ist.

12. System (16) zum Abgeben eines fließfähigen Nahrungsmittelprodukts, wobei das System (16) eine Abgabebaugruppe (1) und eine Abgabemaschine (M) umfasst, die dazu ausgestaltet ist, mit der Abgabebaugruppe (1) zum Abgeben des fließfähigen Nahrungsmittelprodukts zusammenzuwirken,
wobei die Abgabemaschine (M) eine Kaffeeabgabemaschine umfasst oder Teil davon ist, wobei das fließfähige Nahrungsmittelprodukt ein geschäumtes Milchprodukt ist, wobei die Abgabebaugruppe Folgendes umfasst:
- einen Bag-in-Box-artigen Behälter (2) zur Aufnahme eines Produktkonzentrats, wobei der Behälter (2) einen Konzentratauslass (3) zur Freigabe von Produktkonzentrat aus dem Behälter (2) aufweist,
- eine von dem Konzentratauslass (3) beabstandete Mischeinheit (4), wobei die Mischeinheit (4) zum Mischen des Produktkonzentrats mit einer Flüssigkeit, z. B. Wasser, ausgestaltet ist, wobei die Mischeinheit (4) einen Konzentrateinlass (5) zur Aufnahme des aus dem Behälter (2) freigesetzten Produktkonzentrats, einen Flüssigkeitseinlass (6a) zur Aufnahme der Flüssigkeit und einen Auslauf (7) zur Abgabe des mit der Flüssigkeit gemischten Produktkonzentrats als ein fließfähiges Nahrungsmittelprodukt aufweist, und
- eine Leitung (9), die zum Führen eines Stroms von Produktkonzentrat entlang eines Strömungswegs von dem Konzentratauslass (3) des Behälters (2) zu dem Konzentrateinlass (5) der Mischeinheit (4) angeordnet ist, wobei mindestens ein Abschnitt der Leitung (9) flexibel ist,
wobei die Mischeinheit (4) ein Ventilglied (14) zum Regulieren einer Strömung von Produktkonzentrat durch den Konzentrateinlass (5) umfasst, wobei das Ventilglied (14) dazu ausgestaltet ist, durch die Ausgabemaschine (M) gesteuert, z. B. bewegt, zu werden, wobei das Ventilglied (14) dazu ausgestaltet ist, mit einem Flüssigkeitsinjektor (15) der Abgabemaschine verbunden zu werden, wobei die Abgabemaschine (M) einen Flüssigkeitsinjektor (15) aufweist, der dazu ausgestaltet ist, das Ventilglied (14) der Abgabebaugruppe zu steuern und die Flüssigkeit dem Flüssigkeitseinlass (6a) der Mischeinheit (4) zuzuführen, und
wobei die Abgabebaugruppe (1) eine Baugruppe nach einem der Ansprüche 1 - 11 ist, wobei die Mischeinheit (4) der Abgabebaugruppe dazu ausgestaltet ist, das Produktkonzentrat zuerst mit der Flüssigkeit zu mischen, um ein Nahrungsmittelprodukt zu erhalten, und zum Mischen des resultierenden Nahrungsmittelprodukts mit einem Gas, z. B. Luft, insbesondere zum Bereitstellen eines geschäumten Nahrungsmittelprodukts, wobei die Mischeinheit einen jeweiligen Gaseinlass zur Aufnahme des Gases umfasst, wobei die Mischeinheit eine oder mehrere Mikrofiltrationsvorrichtungen zum Mischen eines Gases mit einer Flüssigkeit umfasst.

13. Verfahren zum Abgeben eines fließfähigen Nahrungsmittelprodukts, umfassend:
- Bereitstellen einer Abgabebaugruppe (1) nach einem der Ansprüche 1 - 11, vorzugsweise in einem System (16) nach Anspruch 12,
- Mischen eines Konzentratstroms in der Mischeinheit (4), der von dem Bag-in-Box-artigen Behälter (2) durch die Leitung (9) zu der Mischeinheit (4) geführt wird, mit einer an dem Flüssigkeitseinlass (6a) aufgenommenen, vorzugsweise von der Abgabemaschine (M) des Systems (16) aufgenommenen Flüssigkeit und
- Abgeben des mit der Flüssigkeit gemischten Produktkonzentrats, insbesondere aus der Mischeinheit (4), als ein fließfähiges Nahrungsmittelprodukt, wobei optional das fließfähige Nahrungsmittelprodukt als ein geschäumtes Nahrungsmittelprodukt abgegeben wird.

## Revendications

1. Ensemble de distribution (1) pour distribuer un produit alimentaire fluide, comprenant :
- un récipient de type caisse-outre (2) destiné à contenir un concentré de produit, le récipient (2) ayant une sortie de concentré (3) pour libérer le concentré de produit du récipient (2) ;
- une unité de mélange (4) espacée de la sortie de concentré (3), l'unité de mélange (4) étant conçue pour mélanger le concentré de produit avec un liquide, par exemple de l'eau, l'unité de mélange (4) comportant une entrée de concentré (5) pour recevoir le concentré de produit libéré du récipient (2), une entrée de liquide (6a) pour recevoir le liquide, et un bec verseur (7) pour distribuer comme produit alimentaire fluide le concentré de produit mélangé avec le liquide,
l'unité de mélange (4) étant conçue pour mélanger le concentré de produit avec le liquide d'abord pour obtenir un produit alimentaire liquide, et pour mélanger le produit alimentaire ainsi obtenu avec un gaz, par exemple de l'air, en particulier pour produire un produit alimentaire mousseux, l'unité de mélange comprenant une entrée de gaz respective pour recevoir le gaz, l'unité de mélange comprenant un ou plusieurs dispositifs de microfiltration (17) pour mélanger le gaz avec le produit alimentaire liquide ; et **caractérisé en ce qu'**il comprend en outre
- un conduit (9) conçu pour guider un écoulement de concentré de produit le long d'un trajet d'écoulement allant de la sortie de concentré (3) du récipient (2) à l'entrée de concentré (5) de l'unité de mélange (4), au moins une partie du conduit (9) étant flexible,
et
avant la première utilisation, l'ensemble de distribution (1) pouvant passer d'un état étanche à un état permettant l'écoulement, à l'état étanche, un espace intérieur (S) de l'ensemble de distribution (1) étant isolé de l'environnement de celui-ci, ledit espace intérieur (S) s'étendant au moins dans le récipient (2) et étant conçu pour contenir le concentré de produit, à l'état permettant l'écoulement, le conduit (9) fournissant le trajet d'écoulement pour l'écoulement du concentré de produit,
et en outre
comprenant un ensemble d'activation (10) conçu pour actionner, par exemple déplacer et/ou casser, un élément d'étanchéité (11) de l'ensemble de distribution (1), de sorte que l'ensemble de distribution (1) passe ainsi de l'état étanche à l'état permettant l'écoulement.

2. Ensemble de distribution selon la revendication 1, l'élément d'étanchéité (11) et/ou l'ensemble d'activation (10) étant disposés au niveau de la sortie de concentré (3) du récipient de type caisse-outre (2), en particulier au niveau d'une liaison entre ladite sortie (3) et le conduit (9).

3. Ensemble de distribution selon la revendication 2, l'ensemble d'activation (10) étant conçu pour relier mécaniquement le conduit (9) et le récipient (2) l'un à l'autre et/ou pour fournir une partie du trajet d'écoulement, au moins lorsque l'ensemble de distribution (1) est à l'état permettant l'écoulement.

4. Ensemble de distribution selon la revendication 2 ou 3, l'élément d'étanchéité (11) comprenant une feuille, par exemple en métal et/ou en matière plastique, qui peut être rompue par l'ensemble d'activation (10), l'ensemble d'activation (10) comprenant par exemple un élément de perçage et/ou de coupe pour casser ladite feuille.

5. Ensemble de distribution selon l'une quelconque des revendications 2 à 4, l'élément d'étanchéité (11) comprenant un bouchon et/ou un capuchon, qui de préférence peut être déplacé par l'ensemble d'activation (10) par rapport à une structure de réception respective d'une position d'étanchéité à une position ouverte.

6. Ensemble de distribution selon l'une quelconque des revendications 2 à 4, l'ensemble de distribution (1) pouvant être changé manuellement de l'état étanche à l'état permettant l'écoulement, par exemple par actionnement manuel, par exemple par poussée, d'un ensemble d'activation (10), par exemple actionnement manuel par rapport au récipient de type caisse-outre (2).

7. Ensemble de distribution selon l'une quelconque des revendications précédentes, conçu de sorte que, à l'état permettant l'écoulement, le trajet d'écoulement est sensiblement, de préférence aseptiquement, isolé d'un environnement de l'ensemble de distribution (1), au moins lorsqu'aucun produit n'est distribué à partir de l'ensemble (1).

8. Ensemble de distribution selon l'une quelconque des revendications précédentes, le conduit (9) étant muni d'un élément de pompage et/ou d'une pompe (13) pour pomper le concentré de produit à travers le conduit (9) depuis le récipient (2) jusqu'à l'unité de mélange (4), de préférence, l'élément de pompage et/ou la pompe (13) comprenant une pompe péristaltique et/ou étant conçu pour en faire partie, par exemple pour actionner une paroi flexible du conduit (9) depuis l'extérieur du conduit (9) afin de pousser le concentré de produit le long du trajet d'écoulement à l'intérieur du conduit (9).

9. Ensemble de distribution selon l'une quelconque des revendications précédentes, l'unité de mélange (4) comprenant au moins deux dispositifs de microfiltration (17) pour mélanger le gaz avec le liquide.

10. Ensemble de distribution selon l'une quelconque des revendications précédentes, l'unité de mélange (4) comprenant un élément de soupape (14) pour réguler un écoulement de concentré de produit à travers l'entrée de concentré (5), de préférence l'élément de soupape (14) étant conçu pour être commandé, par exemple déplacé, par une machine de distribution (M) qui est conçue pour produire le liquide à l'entrée de liquide (6a) de l'unité de mélange (4), de préférence, l'élément de soupape (14) étant conçu pour se raccorder à un injecteur de liquide (15) de la machine de distribution, l'élément de soupape (14) étant par exemple disposé au niveau de l'entrée de liquide (6a).

11. Ensemble de distribution selon l'une quelconque des revendications précédentes, une longueur de trajet d'écoulement du conduit (9) étant dans la plage comprise entre 1 cm et 100 cm, de préférence dans la plage comprise entre 5 cm et 60 cm, de préférence encore dans la plage comprise entre 10 cm et 40 cm, par exemple d'environ 20 cm,
de préférence, une largeur de trajet d'écoulement interne, par exemple le diamètre, du conduit (9) étant comprise entre 2 mm et 30 mm, de préférence entre 5 mm et 20 mm, par exemple entre 8 mm et 16 mm, et le conduit (9), au moins une section flexible de celui-ci, étant en un matériau polymère, en particulier d'un matériau polymère flexible et/ou élastique.

12. Système (16) de distribution d'un produit alimentaire fluide, le système (16) comprenant un ensemble de distribution (1) et une machine de distribution (M) conçue pour coopérer avec ledit ensemble de distribution (1) pour distribuer le produit alimentaire fluide,
la machine de distribution (M) comprenant une machine de distribution de café, ou faisant partie de celle-ci, le produit alimentaire fluide étant un produit laitier mousseux,
l'ensemble de distribution comprenant :
- un récipient de type caisse-outre (2) destiné à contenir un concentré de produit, le récipient (2) ayant une sortie de concentré (3) pour libérer le concentré de produit du récipient (2) ;
- une unité de mélange (4) espacée de la sortie de concentré (3), l'unité de mélange (4) étant conçue pour mélanger le concentré de produit avec un liquide, par exemple de l'eau, l'unité de mélange (4) comportant une entrée de concentré (5) pour recevoir le concentré de produit libéré du récipient (2), une entrée de liquide (6a) pour recevoir le liquide, et un bec verseur (7) pour distribuer comme produit alimentaire fluide le concentré de produit mélangé avec le liquide ; et
- un conduit (9) conçu pour guider un écoulement de concentré de produit le long d'un trajet d'écoulement allant de la sortie de concentré (3) du récipient (2) à l'entrée de concentré (5) de l'unité de mélange (4), au moins une partie du conduit (9) étant flexible,
l'unité de mélange (4) comprenant un élément de soupape (14) pour réguler un écoulement de concentré de produit à travers l'entrée de concentré (5), l'élément de soupape (14) étant conçu pour être commandé, par exemple déplacé, par la machine de distribution (M), l'élément de soupape (14) étant conçu pour être relié à un injecteur de liquide (15) de la machine de distribution, la machine de distribution (M) comportant un injecteur de liquide (15) qui est conçu pour commander l'élément de soupape (14) de l'ensemble de distribution et pour alimenter en liquide l'entrée de liquide (6a) de l'unité de mélange (4), et
l'ensemble de distribution (1) étant un ensemble selon l'une quelconque des revendications 1 à 11, l'unité de mélange (4) de l'ensemble de distribution étant conçue pour mélanger le concentré de produit avec le liquide en premier pour obtenir un produit alimentaire, et pour mélanger le produit alimentaire ainsi obtenu avec un gaz, par exemple de l'air, en particulier pour produire un produit alimentaire mousseux, l'unité de mélange comprenant une entrée de gaz respective pour recevoir le gaz, l'unité de mélange comprenant un ou plusieurs dispositifs de microfiltration pour mélanger un gaz avec un liquide.

13. Procédé de distribution **d'un** produit alimentaire fluide, comprenant les étapes consistant à :
- fournir un ensemble de distribution (1) selon l'une quelconque des revendications 1 à 11, de préférence dans un système (16) selon la revendication 12 ;
- mélanger, dans l'unité de mélange (4), un écoulement de concentré, lequel écoulement est guidé du récipient de type caisse-outre (2) à travers le conduit (9) jusqu'à l'unité de mélange (4), avec un liquide reçu au niveau de l'entrée de liquide (6a), de préférence reçu de la machine de distribution (M) du système (16) ; et
- distribuer, en particulier à partir de l'unité de mélange (4), sous forme de produit alimentaire fluide, le concentré de produit mélangé au liquide, le produit alimentaire fluide étant éventuellement distribué sous forme de produit alimentaire mousseux.
